# EUROPÄISCHE PATENTANMELDUNG

(11) **EP 3 770 198 A1**
(43) Veröffentlichungstag der Anmeldung: **27.01.2021**
(21) Anmeldenummer: 19188548.2
(22) Anmeldetag: 26.07.2019
(51) Int. Cl.: C08G 18/24, B01J 38/52, B01J 38/68

(54) **VERFAHREN ZUR HERSTELLUNG UND AUFARBEITUNG VON KATALYSATORLÖSUNGEN**

(71) Anmelder: Covestro Intellectual Property GmbH & Co. KG, 51373 Leverkusen (DE)
(72) Erfinder: Traving, Michael, 51399 Burscheid (DE); Rosellen, Holger, 51371 Leverkusen (DE); Manzelli, Salvatore, 53842 Troisdorf-Spich (DE); Calandrelli, Cosimo, 47798 Krefeld (DE); Reimer, Stephan, 53909 Zülpich (DE); Richter, Frank, 51373 Leverkusen (DE); Kolle, Joerg, 50169 Kerpen-Horrem (DE)
(74) Vertreter: Levpat

(57) **Zusammenfassung**

Die Erfindung betrifft ein Verfahren zur Herstellung einer Lösung B enthaltend mindestens einen Katalysator in mindestens einem zweiten Lösungsmittel, umfassend mindestens die folgenden Schritte (A) Bereitstellen einer Lösung A enthaltend den mindestens einen Katalysator in mindestens einem ersten Lösungsmittel, (B) Behandeln der Lösung A aus Schritt (A) mit Aktivkohle, (C) Abtrennen der Aktivkohle von der Lösung A, und (D) Austausch des mindestens einen ersten Lösungsmittels in Lösung A durch mindestens ein zweites Lösungsmittel, um die Lösung B zu erhalten, enthaltend den mindestens einen Katalysator in mindestens einem zweiten Lösungsmittel, eine Lösung mindestens eines Katalysators in mindestens einem zweiten Lösungsmittel, erhältlich durch das erfindungsgemäße Verfahren, die Verwendung dieser Lösung zur Herstellung einer Zusammensetzung enthaltend den mindestens einen Katalysator, das mindestens eine zweite Lösungsmittel, mindestens ein Polyisocyanat und mindestens eine NCOreaktive Verbindung, die Verwendung dieser Zusammensetzung zur Herstellung von ein- oder mehrschichtigen Lackaufbauten und ein entsprechendes Verfahren.

## Beschreibung

Die Erfindung betrifft ein Verfahren zur Herstellung einer Lösung B enthaltend mindestens einen Katalysator in mindestens einem zweiten Lösungsmittel, umfassend mindestens die Schritte (A) Bereitstellen einer Lösung A enthaltend den mindestens einen Katalysator in mindestens einem ersten Lösungsmittel, (B) Behandeln der Lösung A aus Schritt (A) mit Aktivkohle, (C) Abtrennen der Aktivkohle von der Lösung A, und (D) Austausch des mindestens einen ersten Lösungsmittels in Lösung A durch mindestens ein zweites Lösungsmittel, um die Lösung B zu erhalten, enthaltend den mindestens einen Katalysator in mindestens einem zweiten Lösungsmittel, eine entsprechende Lösung mindestens eines Katalysators in mindestens einem zweiten Lösungsmittel, die Verwendung dieser Lösung zur Herstellung einer Zusammensetzung enthaltend den mindestens einen Katalysator, das mindestens eine zweite Lösungsmittel, mindestens ein Polyisocyanat und mindestens eine NCO-reaktive Verbindung und die entsprechende Zusammensetzung, die Verwendung der Zusammensetzung zur Herstellung von ein- oder mehrschichtigen Lackaufbauten, ein Verfahren zur ein- oder mehrschichtigen Beschichtung eines Substrates mit einem Lackaufbau durch Aufbringen der Zusammensetzung und ein Substrat, beschichtet mit einem ein- oder mehrschichtigen Lackaufbau, erhältlich durch das erfindungsgemäße Verfahren, insbesondere dadurch gekennzeichnet, dass das Substrat eine Karosserie, bevorzugt von einem Fahrzeug, insbesondere von einem Landfahrzeug, Luftfahrzeug oder Wasserfahrzeug, oder ein Teil davon, ist.

WO 2011/051247 A1 und WO 2014/048854 A1 offenbaren ein Verfahren zur Herstellung von Sn-Katalysatoren und deren Verwendung zur Herstellung von Polyurethan-Beschichtungen.

EP 2 493 899 A1 offenbart ein Verfahren zur Herstellung von Metallverbindungen, die als Katalysatoren bei der Herstellung von Polyestern, Polyurethanen oder Polysiloxanen geeignet sind. Gemäß dieser Schrift sind die erhaltenen Metallverbindungen farblos bis gelblich und über mehrere Monate lagerstabil.

EP 2 990 381 A1 und EP 2 274 092 A1 offenbaren ebenfalls ein Verfahren zur Herstellung von Metallverbindungen, die als Katalysatoren bei der Herstellung von Polyurethanen geeignet sind. Gemäß diesem Verfahren werden Alkalimetall- oder Erdalkalimetallstannate mit den entsprechenden Liganden umgesetzt. Die gewünschten Metallverbindungen werden gemäß diesen Schriften ohne weitere Aufreinigung in genügend hoher Reinheit erhalten.

Gemäß der WO 2014/131750 A1 werden Sn-enthaltende Katalysatoren erhalten, indem elementares Zinn mit Hydroxygruppen tragenden Liganden umgesetzt werden. Als Reinigungsmethode der erhaltenen Katalysatoren wird gemäß dieser Schrift ein Umkristallisationsschritt beschrieben.

Entsprechende Metallverbindungen, insbesondere Sn-enthaltende Verbindungen, werden als latente, insbesondere thermolatente, Katalysatoren, zur Herstellung von ein- oder mehrschichtigen Lackaufbauten eingesetzt. Dazu liegen die Katalysatoren bevorzugt in unpolaren Lösungsmitteln, beispielsweise Butylacetat, vor. Diese Lösungen weisen an sich oft eine leichte Gelbverfärbung auf, die sich bei Lagerung und/oder insbesondere bei Kontakt mit Lackhärtern auf Polyisocyanat-Basis, noch verstärken kann, so dass entsprechende Zubereitungen für qualitativ hochwertige Anwendungen, beispielsweise KFZ-Lackierungen, oft nicht geeignet sind.

Ausgehend von diesem Stand der Technik lag der vorliegenden Erfindung die Aufgabe zu Grunde, mindestens einen, vorzugsweise mehrere der oben genannten Nachteile des Stands der Technik zu beheben. Insbesondere lag der vorliegenden Erfindung die Aufgabe zu Grunde, eine Lösung eines Katalysators, insbesondere eines thermolatenten Katalysators, bereitzustellen, die zum einen nach der Herstellung keine Verfärbung, insbesondere keine gelbe Verfärbung, aufweist, und des Weiteren auch nach Lagerung keine Verfärbung, insbesondere keine gelbe Verfärbung, bildet. Aufgabe ist es insbesondere eine entsprechende Katalysator-Lösung bereitzustellen, die eine möglichst niedrige Hazen-Farbzahl nach DIN EN ISO 6271-2:2005-03 aufweist. Erfindungsgemäß soll des Weiteren ein Verfahren bereitgestellt werden, mit dem die genannte Lösung effizient und in gleichbleibend hoher Qualität erhalten werden kann, so dass sie auch verlässlich für qualitativ anspruchsvolle Anwendungen, beispielsweise KFZ-Lackierungen, geeignet sind.

Diese Aufgaben werden erfindungsgemäß gelöst durch das Verfahren zur Herstellung einer Lösung B enthaltend mindestens einen Katalysator in mindestens einem zweiten Lösungsmittel, umfassend mindestens die folgenden Schritte:
(A) Bereitstellen einer Lösung A enthaltend den mindestens einen Katalysator in mindestens einem ersten Lösungsmittel,
(B) Behandeln der Lösung A aus Schritt (A) mit Aktivkohle,
(C) Abtrennen der Aktivkohle von der Lösung A, und
(D) Austausch des mindestens einen ersten Lösungsmittels in Lösung A durch mindestens ein zweites Lösungsmittel, um die Lösung B zu erhalten, enthaltend den mindestens einen Katalysator in mindestens einem zweiten Lösungsmittel.

Des Weiteren werden die erfindungsgemäßen Aufgaben gelöst durch eine Lösung mindestens eines Katalysators in mindestens einem zweiten Lösungsmittel, erhältlich durch das erfindungsgemäße Verfahren, durch eine Lösung enthaltend mindestens einen Katalysator in mindestens einem zweiten Lösungsmittel, wobei die Lösung eine Hazen-Farbzahl, gemessen spektrofotometrisch nach DIN EN ISO 6271-2:2005-03, von weniger als 500 APHA, bevorzugt weniger als 200 APHA, besonders bevorzugt weniger als 100 APHA, ganz besonders bevorzugt weniger als 80 APHA, insbesondere weniger als 60 APHA, aufweist, durch die Verwendung der erfindungsgemäßen Lösung zur Herstellung einer Zusammensetzung enthaltend den mindestens einen Katalysator, das mindestens eine zweite Lösungsmittel, mindestens ein Polyisocyanat und mindestens eine NCO-reaktive Verbindung, durch eine Zusammensetzung enthaltend mindestens ein Polyisocyanat, mindestens eine NCO-reaktive Verbindung und eine erfindungsgemäße Lösung, durch die Verwendung der erfindungsgemäßen Zusammensetzung zur Herstellung von ein- oder mehrschichtigen Lackaufbauten, durch ein Verfahren zur ein- oder mehrschichtigen Beschichtung eines Substrats mit einem Lackaufbau durch Aufbringen einer erfindungsgemäßen Zusammensetzung auf das Substrat, sowie durch ein Substrat, beschichtet mit einem ein- oder mehrschichtigen Lackaufbau, erhältlich durch das erfindungsgemäße Verfahren, wobei das Substrat insbesondere eine Karosserie, bevorzugt von einem Fahrzeug, insbesondere von einem Landfahrzeug, Luftfahrzeug oder Wasserfahrzeug, oder ein Teil davon, sein kann.

Die einzelnen Verfahrensschritte des erfindungsgemäßen Verfahrens werden im Folgenden detailliert beschrieben.

Schritt (A) des erfindungsgemäßen Verfahrens umfasst das Bereitstellen einer Lösung A enthaltend den mindestens einen Katalysator in mindestens einem ersten Lösungsmittel.

Im Allgemeinen kann erfindungsgemäß in Lösung A jeder, dem Fachmann bekannte mindestens eine Katalysator vorliegen. In einer bevorzugten Ausführungsform der vorliegenden Erfindung ist der mindestens eine Katalysator mindestens ein thermolatenter Katalysator.

Insbesondere bevorzugt ist der in Lösung A vorliegende mindestens eine Katalysator ein Zinn enthaltender, thermolatenter Katalysator. Weiter bevorzugt ist der mindestens eine Katalysator mindestens eine zyklische Zinnverbindung der allgemeinen Formel (I), (II), (III) oder (IV): 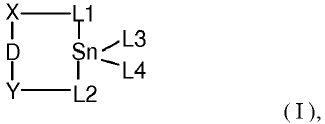 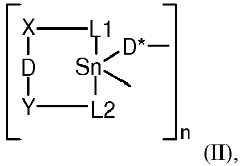 mit n > 1, 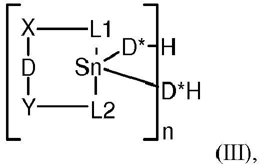 mit n > 1, 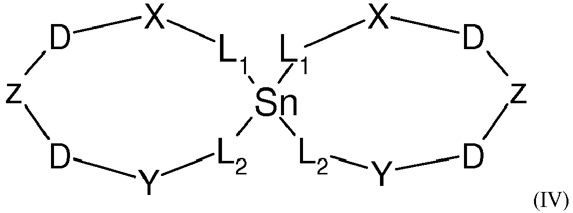 wobei gilt:
D steht für -O-, -S- oder -N(R1)-,
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Hetero Atome aus der Reihe Sauerstoff, Schwefel, Stickstoff enthalten kann, oder für Wasserstoff oder den Rest 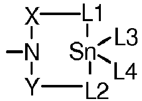 steht,
oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 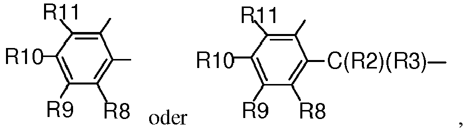
wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-,-SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, - OC(=S)R16, -OS(=O)₂OR17, -OS(=O)₂R18 oder -NR19R20, oder L3 und L4 zusammen stehen für -L1-X-D-Y-L2-,
wobei R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

Bevorzugt handelt es sich bei D* um -O-.

Bevorzugt handelt es sich bei X, Y und Z um die Alkylenreste -C(R2)(R3)-, -C(R2)(R3)-C(R4)(R5)- oder den ortho-Arylenrest

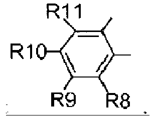

Bevorzugt handelt es sich bei R2 bis R7 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 8 C-Atomen, ganz besonders bevorzugt um Wasserstoff oder Alkylreste mit bis zu 8 C-Atomen, noch weiter bevorzugt um Wasserstoff oder Methyl.

Bevorzugt handelt es sich bei R8 bis R11 um Wasserstoff oder Alkylreste mit bis zu 8 C-Atomen, besonders bevorzugt um Wasserstoff oder Methyl.

Bevorzugt handelt es sich bei L1, L2 und L5 um -NR12-, -S-, -SC(=S)-, -SC(=O)-, -OC(=S)-, -O-, oder -OC(=O)-, besonders bevorzugt um -O-, oder -OC(=O)-.

Bevorzugt handelt es sich bei R12 um Wasserstoff oder einen Alkyl-, Aralkyl-, Alkaryl- oder Arylrest mit bis zu 20 C-Atomen, besonders bevorzugt um Wasserstoff oder einen Alkyl-, Aralkyl-, Alkaryl- oder Arylrest mit bis zu 12 C-Atomen, ganz besonders bevorzugt um Wasserstoff oder einen Methyl-, Ethyl-, Propyl-, Butyl-, Hexyl-oder Octyl-Rest, wobei Propyl-, Butyl-, Hexyl-, und Octyl für alle isomeren Propyl-, Butyl-, Hexyl- sowie Octylreste stehen.

Bevorzugt handelt es sich bei L3 und L4 um -Hal, -OH, -SH, -OR13, -OC(=O)R14, wobei die Reste R13 und R14 bis zu 20 Kohlenstoffatome, bevorzugt bis zu 12 Kohlenstoffatome aufweisen. Besonders bevorzugt handelt es sich bei L3 und L4 um Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat, wobei Pr, Bu, Hex und Oct für alle isomeren Propyl-, Butyl-, Hexyl- sowie Octylreste stehen, noch weiter bevorzugt um Cl-, MeO-, EtO-, PrO-, BuO-, HexO-, OctO-, PhO-, Hexanoat, Laurat, oder Benzoat, wobei Pr, Bu, Hex und Oct für alle isomeren Propyl-, Butyl-, Hexyl- sowie Octylreste stehen.

Bevorzugt handelt es bei R15 bis R20 um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 12 C-Atomen, ganz besonders bevorzugt um Wasserstoff, Methyl-, Ethyl-, Propyl-, Butyl-, Hexyl-, oder Octyl-Reste, wobei Propyl-, Butyl-, Hexyl-, und Octyl für alle isomeren Propyl-, Butyl-, Hexyl- sowie Octylreste stehen.

Die Einheiten L1-X, L2-Y und L5-Z stehen bevorzugt für -CH₂CH₂O-, -CH₂CH(Me)O-,-CH(Me)CH₂O-, -CH₂C(Me)₂O-, -C(Me)₂CH₂O- oder -CH₂C(=O)O-.

Die Einheit L1-X-D-Y-L2 steht bevorzugt für: HN[CH₂CH₂O-]₂, HN[CH₂CH(Me)O-]₂, HN[CH₂CH(Me)O-][CH(Me)CH₂O-], HN[CH₂C(Me)₂O-]₂, HN[CH₂C(Me)₂O-][C(Me)₂CH₂O-], HN[CH₂C(=O)O-]₂, MeN[CH₂CH₂O-]₂, MeN[CH₂CH(Me)O-]₂, MeN[CH₂CH(Me)O-][CH(Me)CH₂O-], MeN[CH₂C(Me)₂O-]₂, MeN[CH₂C(Me)₂O-][C(Me)₂CH₂O-], MeN[CH₂C(=O)O-]₂, EtN[CH₂CH₂O-]₂, EtN[CH₂CH(Me)O-]₂, EtN[CH₂CH(Me)O-][CH(Me)CH₂O-], EtN[CH₂C(Me)₂O-]₂, EtN[CH₂C(Me)₂O-][C(Me)₂CH₂O-], EtN[CH₂C(=O)O-]₂, PrN[CH₂CH₂O-]₂, PrN[CH₂CH(Me)O-]₂, PrN[CH₂CH(Me)O-][CH(Me)CH₂O-], PrN[CH₂C(Me)₂O-]₂, PrN[CH₂C(Me)₂O-][C(Me)₂CH₂O-], PrN[CH₂C(=O)O-]₂, BuN[CH₂CH₂O-]₂, BuN[CH₂CH(Me)O-]₂, BuN[CH₂CH(Me)O-][CH(Me)CH₂O-], BuN[CH₂C(Me)₂O-]₂, BuN[CH₂C(Me)₂O-][C(Me)₂CH₂O-], BuN[CH₂C(=O)O-]₂, HexN[CH₂CH₂O-]₂, HexN[CH₂CH(Me)O-]₂, HexN[CH₂CH(Me)O-][CH(Me)CH₂O-], HexN[CHC(Me)₂O-]₂, HexN[CH₂C(Me)₂O-] [C(Me)₂CH₂O-], HexN[CH₂C(=O)O-]₂, OctN[CH₂CH₂O-]₂, OctN[CH₂CH(Me)O-]₂, OctN[CH₂CH(Me)O-][CH(Me)CH₂O-], OctN[CH₂C(Me)₂O-]₂, OctN[CH₂C(Me)₂O-][C(Me)₂CH₂O-], OctN[CH₂C(=O)O-]₂, wobei Pr, Bu, Hex und Oct für alle isomeren Propyl-, Butyl- sowie Octylreste stehen können, PhN[CH₂CH₂O-]₂, PhN[CH₂CH(Me)O-]₂, PhN[CH₂CH(Me)O-][CH(Me)CH₂O-], PhN[CH₂C(Me)₂O-]₂, PhN[CH₂C(Me)₂O-][C(Me)₂CH₂O-], PhN[CH₂C(=O)O-]₂,

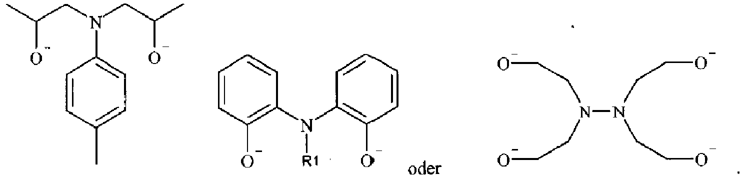

Die Zinnverbindungen - wie dem Fachmann bekannt ist - neigen zur Oligomerisierung, so dass häufig mehrkernige Zinnverbindungen oder Gemische aus ein- und mehrkernigen Zinnverbindungen vorliegen. In den mehrkernigen Zinnverbindungen sind die Zinnatome bevorzugt über Sauerstoffatome ('Sauerstoffbrücken', vide intra) miteinander verbunden. Typische oligomere Komplexe (mehrkernige Zinnverbindungen) entstehen z.B. durch Kondensation der Zinnatome über Sauerstoff oder Schwefel, z.B. 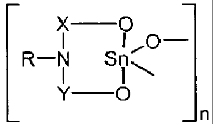 mit n > 1 (vgl. Formel II). Bei niedrigen Oligomerisierungsgraden findet man häufig cyclische, bei höheren Oligomerisierungsgraden lineare Oligomere mit OH- bzw. SH-Endgruppen (vgl. Formel III).

Gemäß einer besonders bevorzugten Ausführungsform der vorliegenden Erfindung ist der thermolatente Katalysator ausgewählt aus der Gruppe mono- oder polyzyklischer Zinnverbindungen vom Typ:
1,1-Di-"R"-5-"organyl"-5-aza-2,8-dioxa-1-stanna-cyclooctan,
1,1-Di-"R"-5-(N-"organyl")aza-3,7-di-"organyl"-2,8-dioxa-1-stanna-cyclooctan,
1,1-Di-"R"-5-(N-"organyl")aza-3,3,7,7-tetra-"organyl"-2,8-dioxa-1-stanna-cyclooctan,
4,12-Di-"organyl"-1,7,9,15-tetraoxa-4,12-diaza-8-stannaspiro[7.7]pentadecan,
4,12-Di-"organyl"-2,6,10,14-tetra-"organyl"-1,7,9,15-tetraoxa-4,12-diaza-8-stannaspiro[7.7]pentadecan,
4,12-Di-"organyl"-2,2,6,6,10,10,14,14-octa-"organyl"-1,7,9,15-tetraoxa-4,12-diaza-8-stannaspiro[7.7]pentadecan,
wobei "R" unabhängig voneinander für D*, L3 oder L4, wie oben definiert, und "organyl" für Rl, wie oben definiert, stehen.

Gemäß einer ganz bevorzugten Ausführungsform der Erfindung ist der thermolatente Katalysator ausgewählt aus der Gruppe bestehend aus 4,12-Di-n-butyl-1,7,9,15-tetraoxa-4,12-diaza-8-stannaspiro[7.7]pentadecan, 4,12-Di-n-butyl-2,6,10,14-tetramethyl-1,7,9,15-tetraoxa-4,12-diaza-8-stannaspiro[7.7]pentadecan, 2,4,6,10,12,14-Hexamethyl-1,7,9,15-tetraoxa-4,12-diaza-8-stannaspiro[7.7]pentadecan, 4,12-Di-n-octyl-2,6,10,14-tetramethyl-1,7,9,15-tetraoxa-4,12-diaza-8-stannaspiro[7.7]pentadecan, 4,12-Di-n-octyl-1,7,9,15-tetraoxa-4,12-diaza-8-stannaspiro[7.7]pentadecan, 4,12-Dimethyl-1,7,9,15-tetraoxa-4,12-diaza-8-stannaspiro[7.7]pentadecan, 1,1-Dichloro-5-methyl-5-aza-2,8-dioxa-1-stannacyclooctan und Mischungen davon.

Verfahren zur Herstellung eines solchen Katalysators sind dem Fachmann an sich bekannt und beispielsweise beschrieben in EP 2 900 716 A1, EP 2 900 717 A1, EP 2 772 496 A1, EP 14182806, J. Organomet. Chem. 2009, 694, Seiten 3184 bis 3189, Chem. Heterocycl. Comp. 2007, 43, Seiten 813 bis 834, Indian J. Chem. 1967, 5, Seiten 643 bis 645, sowie in der darin angeführten Literatur.

Bevorzugt erfolgt Schritt (A) dadurch, dass mindestens eine zinnhaltige Vorläuferverbindung, insbesondere ein Zinn(IV)-Salz, in dem mindestens einen ersten Lösungsmittel zu dem mindestens einen Katalysator umgesetzt wird.

Bevorzugt beträgt die Konzentration der mindestens einen zinnhaltigen Vorläuferverbindung in dem mindestens einen ersten Lösungsmittel 2 bis 60 Gew.-%, bezogen auf die gesamte Lösung A.

In Schritt (A) des erfindungsgemäßen Verfahrens liegt der mindestens eine Katalysator in mindestens einem ersten Lösungsmittel vor. Dabei kann erfindungsgemäß ein erstes Lösungsmittel eingesetzt werden, oder es wird eine Mischung von ersten Lösungsmitteln eingesetzt. Erfindungsgemäß bevorzugt wird ein erstes Lösungsmittel eingesetzt.

Erfindungsgemäß bevorzugt wird als erstes Lösungsmittel ein Lösungsmittel mit einem Siedepunkt von 40 bis 100 °C, besonders bevorzugt 50 bis 80 °C, jeweils bei 1 bar(a), eingesetzt.

Besonders bevorzugt wird das mindestens eine erste Lösungsmittel ausgewählt aus der Gruppe bestehend aus Alkoholen, bevorzugt Methanol, Ethanol, Propanol, insbesondere iso-Propanol, oder Mischungen davon, Ethern, bevorzugt Diethylether, Tetrahydrofuran, tert-Butyl-methyl-ether oder Mischungen davon, halogenierten Lösungsmitteln, bevorzugt Dichlormethan, Chlorform oder Mischungen davon, und Mischungen davon.

Der mindestens eine Katalysator kann in dem mindestens einen ersten Lösungsmittel in jeder dem Fachmann als geeignet erscheinenden Konzentration vorliegen. Bevorzugt beträgt die Konzentration des mindestens einen Katalysators in dem mindestens einen ersten Lösungsmittel 0,1 bis 80 Gew.-%, besonders bevorzugt 1 bis 50 Gew.-%, ganz besonders bevorzugt 2 bis 20 Gew.-%, insbesondere bevorzugt 5 bis 20 Gew.-%, jeweils bezogen auf die gesamte Lösung A.

Lösung A enthält im Allgemeinen den mindestens einen Katalysator, das mindestens eine erste Lösungsmittel und gegebenenfalls Verunreinigungen wie Wasser, beispielsweise bis zu 0,5 Gew.-%, Liganden aus der Katalysatorherstellung, beispielsweise N-Organyl-dialkanolmine, insbesondere N-Butyl-diisopropylamin, Natriumchlorid etc. Bevorzugt liegen in Lösung A nur der mindestens eine Katalysator, bevorzugt ein Katalysator, und das mindestens eine erste Lösungsmittel, bevorzugt ein erstes Lösungsmittel, vor.

Erfindungsgemäß können gegebenenfalls vorhandene Verunreinigungen durch dem Fachmann bekannte Reinigungsschritte, beispielsweise Filtration o.ä. abgetrennt werden.

In einer bevorzugten Ausführungsform des erfindungsgemäßen Verfahrens wird die in Schritt (A) bereitgestellte Lösung A ohne weitere Zwischenschritte in Schritt (B) überführt. In einer weiteren bevorzugten Ausführungsform des erfindungsgemäßen Verfahrens wird Lösung A enthaltend den mindestens einen Katalysators in mindestens einem ersten Lösungsmittel vor Schritt (B), d.h. nach Schritt (A), für mindestens 6 h bei einer Temperatur von mindestens -10 °C behandelt.

Diese Behandlung kann im Allgemeinen in jeder dem Fachmann als geeignet erscheinenden Vorrichtung erfolgen, beispielsweise in einem Tank, Rührbehälter, Container, Reaktionsbehälter etc.

Die Behandlung findet im Allgemeinen für mindestens 6 h, bevorzugt für mindestens 12 h, weiter bevorzugt für mindestens 24 h, statt. Die Behandlung findet im Allgemeinen für höchstens 168 h, bevorzugt für höchstens 48 h, statt.

Die Behandlung findet im Allgemeinen bei einer Temperatur von mindestens -10 °C, bevorzugt bei 10 bis 80 °C, besonders bevorzugt bei 15 bis 60 °C, ganz besonders bevorzugt bei Raum- bzw. Umgebungstemperatur statt.

Lösung A kann während dieser Behandlung auf jede dem Fachmann bekannt Art gerührt werden. In einer zweiten Ausführungsform wird Lösung A während dieser Behandlung nicht gerührt. Schritt (B) des erfindungsgemäßen Verfahrens umfasst das Behandeln der Lösung A aus Schritt (A) mit Aktivkohle.

Im Rahmen der vorliegenden Erfindung wird unter "Behandeln der Lösung A aus Schritt (A) mit Aktivkohle" verstanden, dass Lösung A mit Aktivkohle in Kontakt gebracht wird. Dieses Inkontaktbringen kann erfindungsgemäß auf jede Art erfolgen, die dem Fachmann als geeignet erscheint, beispielsweise Einbringen von Aktivkohle in die Lösung A oder Durchströmen der Aktivkohle mit Lösung A.

Schritt (B) des erfindungsgemäßen Verfahrens wird bevorzugt bei einer Temperatur und einem Druck durchgeführt, bei der bzw. dem das mindestens eine erste Lösungsmittel flüssig ist. Die Temperatur in Schritt (B) beträgt daher bevorzugt -10 bis 80 °C, besonders bevorzugt 10 bis 60 °C. Der Druck in Schritt (B) beträgt daher bevorzugt 0,5 bis 7 bar(a), besonders bevorzugt 0,8 bis 2 bar(a) und ganz besonders bevorzugt 1 bis 1,5 bar(a).

In Schritt (B) des erfindungsgemäßen Verfahrens wird die Lösung A im Allgemeinen mit einer ausreichend großen Menge Aktivkohle behandelt. Bevorzugt wird in Schritt (B) die Aktivkohle in einer Menge von 1 bis 100 g/100 g Lösung A, besonders bevorzugt 2 bis 12 g/100 g Lösung A, eingesetzt.

Die in Schritt (B) des erfindungsgemäßen Verfahrens eingesetzte Aktivkohle weist vorzugsweise eine spezifische Oberfläche von 400 bis 2500 m²/g, gemessen nach dem BET-Verfahren gemäß DIN ISO 9277:2003-05 auf. Bevorzugt wird eine Aktivkohle auf Basis von Kokosnussschalen oder Kohle, besonders bevorzugt auf Basis von Kokosnussschalen, eingesetzt.

Bevorzugt wird Schritt (B) des erfindungsgemäßen Verfahrens so lange durchgeführt bis die Lösung eine gewünschte Hazen-Farbzahl aufweist. Besonders bevorzugt wird Schritt (B) für bis zu 48 h, besonders bevorzugt für bis zu 24 h, insbesondere bevorzugt für bis zu 12 h, ganz besonders bevorzugt für bis zu 4 h durchgeführt. Schritt (B) des erfindungsgemäßen Verfahrens wird bevorzugt für mindestens 2 Stunden, besonders bevorzugt für mindestens 3 Stunden durchgeführt. Weiter bevorzugt beträgt die Hazen-Farbzahl, gemessen spektrofotometrisch nach DIN EN ISO 6271-2:2005-03, der in Schritt (B) erhaltenen Lösung weniger als 500 APHA, bevorzugt weniger als 200 APHA, besonders bevorzugt weniger als 100 APHA, ganz besonders bevorzugt weniger als 80 APHA, insbesondere weniger als 60 APHA. Die Hazen-Farbzahl, gemessen spektrofotometrisch nach DIN EN ISO 6271-2:2005-03 beträgt dabei bevorzugt mindestens 1 APHA.

Schritt (C) des erfindungsgemäßen Verfahrens umfasst das Abtrennen der Aktivkohle von der Lösung A.

Schritt (C) des erfindungsgemäßen Verfahrens kann im Allgemeinen auf jede dem Fachmann bekannte Art erfolgen.

Für die bevorzugte Ausführungsform, dass Schritt (B) des erfindungsgemäßen Verfahrens dadurch erfolgt, dass die Aktivkohle in Lösung A eingebracht wird, erfolgt Schritt (C) des erfindungsgemäßen Verfahrens bevorzugt durch Filtration oder Abdekantieren.

Für die weitere erfindungsgemäße Ausführungsform, dass Schritt (B) des erfindungsgemäßen Verfahrens dadurch erfolgt, dass die Lösung A die Aktivkohle durchströmt, erfolgt Schritt (C) des erfindungsgemäßen Verfahrens bevorzugt dadurch, dass durch eine geeignete Vorrichtung, beispielsweise einen Trichter oder eine Filternutsche, die Aktivkohle nach dem Durchströmen der Aktivkohle von Lösung A getrennt wird.

Es ist erfindungsgemäß auch möglich, dass zumindest ein Teil der Lösung A im Kreis gefahren wird, d.h., dass die Lösung A die Aktivkohle mehrfach durchströmt. Dafür geeignete Vorrichtungen sind dem Fachmann an sich bekannt.

Schritt (C) des erfindungsgemäßen Verfahrens wird bevorzugt bei einer Temperatur und einem Druck durchgeführt, bei der bzw. dem das mindestens eine erste Lösungsmittel flüssig ist. Die Temperatur in Schritt (C) beträgt daher bevorzugt -10 bis 80 °C, besonders bevorzugt 10 bis 60 °C. Der Druck in Schritt (C) beträgt daher bevorzugt 0,5 bis 7 bar(a), besonders bevorzugt 0,8 bis 2 bar(a) und ganz besonders bevorzugt 1 bis 1,5 bar(a).

Schritt (D) des erfindungsgemäßen Verfahrens umfasst den Austausch des mindestens einen ersten Lösungsmittels in Lösung A durch mindestens ein zweites Lösungsmittel, um die Lösung B zu erhalten, enthaltend den mindestens einen Katalysator in mindestens einem zweiten Lösungsmittel.

Im Allgemeinen kann in Schritt (D) des erfindungsgemäßen Verfahrens jedes dem Fachmann als geeignet erscheinende, mindestens eine zweite Lösungsmittel eingesetzt werden. Dabei kann erfindungsgemäß ein zweites Lösungsmittel eingesetzt werden, oder es wird eine Mischung von zweiten Lösungsmitteln eingesetzt. Erfindungsgemäß bevorzugt wird ein zweites Lösungsmittel eingesetzt.

Erfindungsgemäß bevorzugt weist das mindestens eine zweite Lösungsmittel einen Siedepunkt von 80 bis 180 °C, besonders bevorzugt 100 bis 140 °C, jeweils bei 1 bar(a), auf.

Erfindungsgemäß bevorzugt sind das mindestens eine erste Lösungsmittel und das mindestens eine zweite Lösungsmittel unterschiedlich.

Erfindungsgemäß ist es weiter bevorzugt, wenn der Siedepunkt des mindestens einen zweiten Lösungsmittels höher, bevorzugt mindestens 10 °C höher, besonders bevorzugt mindestens 30 °C höher, ist als der Siedepunkt des mindestens einen ersten Lösungsmittels.

Die vorliegende Erfindung betrifft bevorzugt das erfindungsgemäße Verfahren, wobei das mindestens eine zweite Lösungsmittel ausgewählt ist aus der Gruppe bestehend aus Estern, bevorzugt Butylacetat, insbesondere n-Butylacetat, Ethylacetat, Ethylenglykoldiacetat, 2-Methoxypropylacetat oder Mischungen davon, aromatischen Lösungsmitteln, bevorzugt Benzol, Toluol, Xylole oder Mischungen davon, Lactonen, bevorzugt Butyrolacton oder Mischungen davon, Carbonaten, bevorzugt Diethylcarbonat, Propylencarbonat, Ethylencarbonat oder Mischungen davon.

Schritt (D) des erfindungsgemäßen Verfahrens umfasst den Austausch des mindestens einen ersten Lösungsmittels durch das mindestens eine zweite Lösungsmittel.

Verfahren für einen solchen Lösungsmittel-Austausch sind dem Fachmann an sich bekannt. Beispielsweise kann Schritt (D) des erfindungsgemäßen Verfahrens dadurch erfolgen, dass das mindestens eine erste Lösungsmittel bei vermindertem Druck und/oder erhöhter Temperatur entfernt wird, um den mindestens einen Katalysator in fester Form zu erhalten. Ein geeigneter Druck liegt beispielsweise bei 0,001 bar(a) bis 5 bar(a). Eine geeignete Temperatur liegt beispielsweise bei 20 bis 150 °C. Der so erhaltene feste Katalysator wird anschließend in dem mindestens einen zweiten Lösungsmittel, gegebenenfalls bei erhöhter Temperatur, gelöst.

In einer weiteren erfindungsgemäßen Ausführungsform kann Schritt (D) dadurch erfolgen, dass zum einen das mindestens eine erste Lösungsmittel bei vermindertem Druck und/oder erhöhter Temperatur, beispielsweise 0,001 bis 5 bar(a) und/oder 20 bis 150 °C entfernt wird, während gleichzeitig das mindestens eine zweite Lösungsmittel, welches bevorzugt einen höheren Siedepunkt aufweist als das mindestens eine erste Lösungsmittel, zugegeben wird.

In einer weiteren erfindungsgemäßen Ausführungsform kann Schritt (D) dadurch erfolgen, dass zunächst das mindestens eine zweite Lösungsmittel, welches bevorzugt einen höheren Siedepunkt aufweist als das mindestens eine erste Lösungsmittel aufweist, zumindest zum Teil zu der in Schritt (C) erhaltenen Mischung gegeben wird und dann das mindestens eine erste Lösungsmittel bei vermindertem Druck und/oder erhöhter Temperatur, beispielsweise 0,001 bis 5 bar(a) und/oder 20 bis 150 °C, gegebenenfalls unter weiterer Zugabe des zweiten Lösungsmittels, entfernt wird.

Der Austausch des mindestens einen ersten Lösungsmittels gegen das mindestens eine zweite Lösungsmittel kann erfindungsgemäß auch dadurch erfolgen, das das mindestens eine erste Lösungsmittel und das mindestens eine zweite Lösungsmittel so gewählt werden, dass aufgrund der unterschiedlichen Löslichkeit des mindestens einen Katalysators in den beiden Lösungsmitteln und der Dichten der beiden Lösungsmittels beim Inkontaktbringen der Mischung enthaltend den mindestens einen Katalysator und das mindestens eine erste Lösungsmittel mit dem mindesten einen zweiten Lösungsmittels der mindestens eine Katalysators zumindest teilweise in das mindestens eine zweite Lösungsmittel übergeht und sich aufgrund einer Mischungslücke zwei Phasen ausbilden. Diese können dann beispielswiese durch Abdekantieren voneinander getrennt werden, um die Lösung B zu erhalten.

Nach Schritt (D) des erfindungsgemäßen Verfahrens wird Lösung B erhalten, enthaltend mindestens einen Katalysator in mindestens einem zweiten Lösungsmittel.

Lösung B enthält den mindestens einen Katalysator in einer Menge von beispielsweise 3 bis 45 Gew.-%, bevorzugt 15 bis 25 Gew.-%, jeweils bezogen auf die gesamte Lösung B.

Durch das erfindungsgemäße Verfahren, insbesondere durch den Umstand, dass die Reinigung der Lösung mit Aktivkohle auf der Stufe erfolgt, in der der mindestens eine Katalysator in mindestens einem ersten Lösungsmittel vorliegt, kann zum eine entsprechende Lösung B in mindestens einem zweiten Lösungsmittel erhalten werden, die keine Verfärbung, insbesondere keine Gelbverfärbung, aufweist. Des Weiteren wird erfindungsgemäß eine Lösung B erhalten, die auch bei Lagerung unter einer Inertgasatmosphäre bei einer Temperatur unterhalb 60 °C über einen mehrtägigen, bevorzugt mehrwöchigen Zeitraum keine Verfärbung, insbesondere keine Gelbverfärbung, entwickelt.

Die vorliegende Erfindung betrifft daher auch die Lösung mindestens eines Katalysators in mindestens einem zweiten Lösungsmittel, erhältlich durch das erfindungsgemäße Verfahren.

Des Weiteren betrifft die vorliegende Erfindung die erfindungsgemäße Lösung enthaltend mindestens einen Katalysator in mindestens einem zweiten Lösungsmittel, wobei die Lösung eine Hazen-Farbzahl, gemessen spektrofotometrisch nach DIN EN ISO 6271-2:2005-03, von weniger als 500 APHA, bevorzugt weniger als 200 APHA, besonders bevorzugt weniger als 100 APHA, ganz besonders bevorzugt weniger als 80 APHA, insbesondere weniger als 60 APHA, aufweist. Die Hazen-Farbzahl, gemessen spektrofotometrisch nach DIN EN ISO 6271-2:2005-03 beträgt dabei bevorzugt mindestens 1 APHA.

Bevorzugt betrifft die vorliegende Erfindung die erfindungsgemäße Lösung, wobei sich die Hazen-Farbzahl der Lösung, gemessen spektrofotometrisch nach DIN EN ISO 6271-2:2005-03, bei Lagerung unter einer Inertgasatmosphäre bei einer Temperatur von 30 °C über einen Zeitraum von 10 Wochen um weniger als 200 APHA, bevorzugt weniger als 100 APHA und besonders bevorzugt weniger als 50 APHA verändert.

Zu dem in der erfindungsgemäßen Lösung vorliegenden mindestens einen zweiten Lösungsmittel gilt das bezüglich des erfindungsgemäßen Verfahrens Gesagte entsprechend.

Bevorzugt betrifft die vorliegende Erfindung die erfindungsgemäße Lösung, wobei der mindestens eine Katalysator mindestens eine zyklische Zinnverbindung der allgemeinen Formel (I), (II), (III) oder (IV) ist: 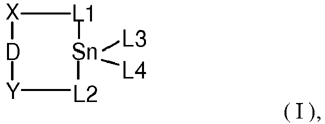 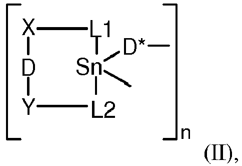 mit n > 1, 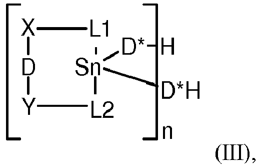 mit n > 1, 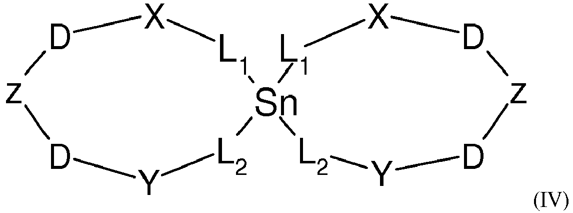 wobei gilt:
D steht für -O-, -S- oder -N(R1)-,
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 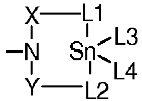 steht,
oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 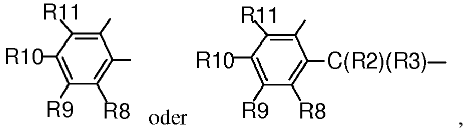
wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-,-SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15,-OC(=S)R16, -OS(=O)₂OR17, -OS(=O)₂R18 oder -NR19R20, oder L3 und L4 zusammen stehen für -L1-X-D-Y-L2-,
wobei R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

Zu den bevorzugten Ausführungsformen des mindestens einen Katalysators gilt das bezüglich des erfindungsgemäßen Verfahrens Gesagte entsprechend. In der erfindungsgemäßen Lösung liegt der mindestens eine Katalysator in einer Menge von beispielsweise 3 bis 40 Gew.-%, bevorzugt 15 bis 25Gew.-%, jeweils bezogen auf die gesamte Lösung, vor.

Die vorliegende Erfindung betrifft auch die Verwendung der erfindungsgemäßen Lösung zur Herstellung einer Zusammensetzung enthaltend den mindestens einen Katalysator, das mindestens eine zweite Lösungsmittel, mindestens ein Polyisocyanat und mindestens eine NCO-reaktive Verbindung.

Erfindungsgemäß geeignete Katalysatoren und zweite Lösungsmittel sind bezüglich des erfindungsgemäßen Verfahrens bereits beschrieben. Erfindungsgemäß geeignete NCO-reaktive Verbindungen sind beispielsweise beschrieben in der WO 2017/182429 A1 und insbesondere ausgewählt aus der Gruppe bestehend aus niedermolekularen Diolen, z.B. 1,2-Ethandiol, 1,3- bzw. 1,2-Propandiol, 1,4-Butandiol, Triolen, z.B. Glycerin, Trimethylolpropan, Tetraolen, z.B. Pentaerythrit, kurzkettigen Polyaminen, Polyhydroxyverbindungen wie Polyetherpolyolen, Polyesterpolyolen, Polyurethanpolyolen, Polysiloxanpolyolen, Polycarbonatpolyolen, Polyetherpolyaminen, Polybutadienpolyolen, Polyacrylatpolyolen, Polymethacrylatpolyolen, deren Mischpolymerisaten, und Mischungen davon.

Die Polyhydroxyverbindungen weisen bevorzugt massenmittlere Molekulargewichte Mw > 500 Dalton, gemessen mittels Gelpermeationschromatographie (GPC) gegen einen Polystyrolstandard, besonders bevorzugt zwischen 800 und 100.000 Dalton, insbesondere zwischen 1.000 und 50.000 Dalton auf.

Die Polyhydroxyverbindungen weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Glasübergangstemperaturen, gemessen mit Hilfe von DSC-Messungen nach DIN-EN-ISO 1 1357-2, der Polyhydroxyverbindungen liegen bevorzugt zwischen -150 und 100 °C, besonders bevorzugt zwischen -120°C und 80°C.

Erfindungsgemäß geeignete Polyisocyanate sind beispielsweise beschrieben in der WO 2017/182429 A1 und bevorzugt ausgewählt aus der Gruppe bestehend aus Di- oder Triisocyanaten, wie z.B. 1,4-Butandiisocyanat, 1,5-Pentandiisocyanat (Pentamethylendiisocyanat, PDI), 1,6-Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H₁₂MDI), 3,5,5-Trimethyl-1-isocyanato-3-isocyanatomethylcyclohexan (Isophorondiisocyanat, IPDI), 1,3- sowie 1,4-Bis(isocyanatomethyl)cyclohexan (H₆XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3- und/oder 1,4-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethansowie Carbodiimid/Uretonimin-Struktureinheiten, und Mischungen davon.

Bevorzugt werden Polyisocyanate auf Basis aliphatischer und cycloaliphatischer Diisocyanate eingesetzt. Die vorliegende Erfindung betrifft daher des Weiteren die erfindungsgemäße Zusammensetzung enthaltend mindestens ein Polyisocyanat, mindestens eine NCO-reaktive Verbindung und eine erfindungsgemäße Lösung, d.h. die erfindungsgemäße Lösung B.

Die vorliegende Erfindung betrifft auch die Verwendung der erfindungsgemäßen Zusammensetzung zur Herstellung von ein- oder mehrschichtigen Lackaufbauten.

Die vorliegende Erfindung betrifft des Weiteren ein Verfahren zur ein- oder mehrschichtigen Beschichtung eines Substrates mit einem Lackaufbau durch Aufbringen einer erfindungsgemäßen Zusammensetzung auf das Substrat.

Die vorliegende Erfindung betrifft auch das Substrat, beschichtet mit einem ein- oder mehrschichtigen Lackaufbau, enthaltend eine erfindungsgemäße Zusammensetzung und/oder erhältlich durch das erfindungsgemäße Verfahren, insbesondere dadurch gekennzeichnet, dass das Substrat eine Karosserie, bevorzugt von einem Fahrzeug, insbesondere von einem Landfahrzeug, Luftfahrzeug oder Wasserfahrzeug, oder ein Teil davon, ist.

### Beispiele:

Die Messung der Hazen-Farbzahl erfolgte spektrofotometrisch nach DIN EN ISO 6271-2:2005-03 mit einem LICO 400-Spektrofotometer der Fa. Lange, DE. Als Katalysator wurde 4,12-Di-n-butyl-2,6,10,14-tetramethyl-1,7,9,15-tetraoxa-4,12-diaza-8-stannaspiro[7.7]pentadecan eingesetzt.

### Beispiel 1:

Eine Katalysatormischung bestehend aus 61 kg Methanol und 12,7 kg Katalysator wurde in einem Rührkessel für 24 h bei 10 °C getempert und anschließend für 24 h über 6 kg Aktivkohle auf Basis von Kokosnussschalen im Kreislauf geführt. Über die Versuchszeit wurde die Färbung der Katalysatorlösung langsam reduziert bis auf einen Farbwert von 16 APHA.

Anschließend wurde der Lösung 175 kg Butylacetat zugegeben und das Methanol und Teile des Butylacetats bei maximal 24 °C durch eine einstufige Destillation im Vakuum abgezogen. Die erhaltene Katalysatorlösung hatte einen Katalysatorgehalt von 10,4 Gew.-% und einen Farbwert von 16 APHA.

Nach einer temperierten Lagerung bei 50 °C zeigte die Probe nach 10 Tagen eine Farbzahl von 18 APHA.

Nach einer temperierten Lagerung bei 50 °C zeigte die Probe nach 69 Tagen eine Farbzahl von 150 APHA.

### Beispiel 2:

Eine Katalysatormischung bestehend aus 66 kg Methanol und 12,6 kg Katalysator wurde nach der Herstellung des Katalysators für 24 h über 6 kg Aktivkohle auf Basis von Kokosnussschalen im Kreislauf geführt. Über die Versuchszeit wurde die Färbung der Katalysatorlösung langsam reduziert bis auf einen Farbwert von 42 APHA.

Anschließend wurde der Lösung 175 kg Butylacetat zugegeben und das Methanol und Teile des Butylacetats bei maximal 27 °C durch eine einstufige Destillation im Vakuum abgezogen. Die erhaltene Katalysatorlösung hatte einen Katalysatorgehalt von 11,96 Gew.-% und einen Farbwert von 42 APHA.

Nach einer Lagerzeit von 97 h bei Raumtemperatur konnte eine Farbzahl von 342 APHA gemessen werden.

### Beispiel 3:

Eine Katalysatormischung bestehend aus 66 kg Methanol und 11,5 kg Katalysator wurde nach der Herstellung des Katalysators für 24 h getempert und anschließend für 24 h über 6 kg Aktivkohle auf Basis von Kokosnussschalen im Kreislauf geführt. Über die Versuchszeit wurde die Färbung der Katalysatorlösung langsam reduziert bis auf einen Farbwert von 33 APHA. Tabelle 1 zeigt die zeitliche Abnahme der Färbung der Lösung:

**Tabelle 1**

| | | | | | | | |
|---|---|---|---|---|---|---|---|
| Laufzeit [h] | 0 | 4 | 8 | 12 | 16 | 20 | 24 |
| APHA | 81 | 46 | 41 | 40 | 36 | 32 | 33 |

Anschließend wurden der Lösung 175 kg Butylacetat zugegeben und das Methanol und Teile des Butylacetats bei maximal 24 °C durch eine einstufige Destillation im Vakuum abgezogen. Die erhaltene Katalysatorlösung hatte einen Katalysatorgehalt von 9,7 Gew.-% und einen Farbwert von 33 APHA.

### Beispiel 4:

### Behandlung einer Katalysator-Lösung in MeOH mit Aktivkohle

Eine Katalysatormischung bestehend aus 100 kg Methanol und 14,72 kg Katalysator (12,83%) wurde in einem Rührkessel für 24 h bei 10 °C getempert und anschließend für 24 h über 6 kg Aktivkohle auf Basis von Kokosnussschalen im Kreislauf geführt. Über die Versuchszeit wurde die Färbung der Katalysatorlösung von 248 APHA reduziert bis auf einen Farbwert von 69 APHA. Die erhaltene Katalysatorkonzentration nach der Entfärbung betrug 12,22%. Die Ausbeute bezogen auf den Katalysator betrug 95,2%.

### Vergleichsbeispiel 5:

### Behandlung einer Katalysator-Lösung in Butylacetat mit Aktivkohle als Vergleich

Zum Vergleich mit Beispiel 4 wurde eine Katalysatormischung bestehend aus 100 kg Butylacetat und 11,08 kg Katalysator (9,97%) in einem Rührkessel für 24 h bei 10 °C getempert und anschließend für 24 h über 6 kg Aktivkohle auf Basis von Kokosnussschalen im Kreislauf geführt. Über die Versuchszeit wurde die Färbung der Katalysatorlösung von 145 APHA reduziert bis auf einen Farbwert von 60 APHA. Die erhaltene Katalysatorkonzentration nach der Entfärbung betrug 7,7%. Die Ausbeute bezogen auf den Katalysator betrug 78,0%.

## Patentansprüche

1. Verfahren zur Herstellung einer Lösung B enthaltend mindestens einen Katalysator in mindestens einem zweiten Lösungsmittel, umfassend mindestens die folgenden Schritte:
(A) Bereitstellen einer Lösung A enthaltend den mindestens einen Katalysator in mindestens einem ersten Lösungsmittel,
(B) Behandeln der Lösung A aus Schritt (A) mit Aktivkohle,
(C) Abtrennen der Aktivkohle von der Lösung A, und
(D) Austausch des mindestens einen ersten Lösungsmittels in Lösung A durch mindestens ein zweites Lösungsmittel, um die Lösung B zu erhalten, enthaltend den mindestens einen Katalysator in mindestens einem zweiten Lösungsmittel.

2. Verfahren nach Anspruch 1, **dadurch gekennzeichnet, dass** der mindestens eine Katalysator mindestens ein thermolatenter Katalysator ist.

3. Verfahren nach Anspruch 1 oder 2, **dadurch gekennzeichnet, dass** der mindestens eine Katalysator mindestens eine zyklische Zinnverbindung der allgemeinen Formel (I), (II), (III) oder (IV) ist: 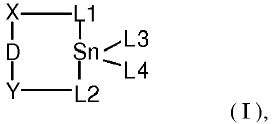 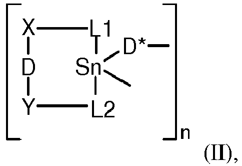 mit n > 1, 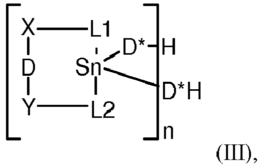 mit n > 1, 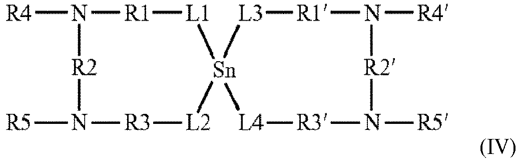 wobei gilt:
D steht für -O-, -S- oder -N(R1)-,
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 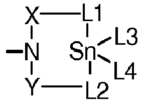 steht,
oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 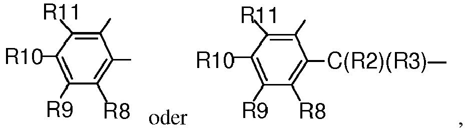
wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, -OC(=S)R16, -OS(=O)₂OR17, -OS(=O)₂R18 oder -NR19R20, oder L3 und L4 zusammen stehen für -L1-X-D-Y-L2-,
wobei R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

4. Verfahren nach einem der Ansprüche 1 bis 3, **dadurch gekennzeichnet, dass** Lösung A enthaltend den mindestens einen Katalysators in mindestens einem ersten Lösungsmittel vor Schritt (B) für mindestens 6 h bei einer Temperatur von mindestens 10 °C behandelt wird.

5. Verfahren nach einem der Ansprüche 1 bis 4, **dadurch gekennzeichnet, dass** Schritt (A) dadurch erfolgt, dass mindestens eine zinnhaltige Vorläuferverbindung, insbesondere ein Zinn(IV)-Salz, in dem mindestens einen ersten Lösungsmittel zu dem mindestens einen Katalysator umgesetzt wird.

6. Verfahren nach Anspruch 5, **dadurch gekennzeichnet, dass** die Konzentration der mindestens einen zinnhaltigen Vorläuferverbindung in dem mindestens einen ersten Lösungsmittel 2 bis 60 Gew.-%, bezogen auf die gesamte Lösung A, beträgt.

7. Verfahren nach einem der Ansprüche 1 bis 6, **dadurch gekennzeichnet, dass** der Siedepunkt des mindestens einen zweiten Lösungsmittels höher, bevorzugt mindestens 10 °C höher, besonders bevorzugt mindestens 30 °C höher, ist als der Siedepunkt des mindestens einen ersten Lösungsmittels.

8. Verfahren nach einem der Ansprüche 1 bis 7, **dadurch gekennzeichnet, dass** das mindestens eine erste Lösungsmittel ausgewählt ist aus der Gruppe bestehend aus Alkoholen, bevorzugt Methanol, Ethanol, Propanol, insbesondere iso-Propanol, oder Mischungen davon, Ethern, bevorzugt Diethylether, Tetrahydrofuran, tert-Butyl-methyl-ether oder Mischungen davon, halogenierten Lösungsmitteln, bevorzugt Dichlormethan, Chlorform oder Mischungen davon, und Mischungen davon.

9. Verfahren nach einem der Ansprüche 1 bis 8, **dadurch gekennzeichnet, dass** das mindestens eine zweite Lösungsmittel ausgewählt ist aus der Gruppe bestehend aus Estern, bevorzugt Butylacetat, insbesondere n-Butylacetat, Ethylacetat, Ethylenglykoldiacetat, 2-Methoxypropylacetat oder Mischungen davon, aromatischen Lösungsmitteln, bevorzugt Benzol, Toluol, Xylole oder Mischungen davon, Lactonen, bevorzugt Butyrolacton oder Mischungen davon, Carbonaten, bevorzugt Diethylcarbonat, Propylencarbonat, Ethylencarbonat und Mischungen davon.

10. Lösung mindestens eines Katalysators in mindestens einem zweiten Lösungsmittel, erhältlich durch das Verfahren gemäß einem der Ansprüche 1 bis 9.

11. Lösung enthaltend mindestens einen Katalysator in mindestens einem zweiten Lösungsmittel, mit einer Hazen-Farbzahl, gemessen spektrofotometrisch nach DIN EN ISO 6271-2:2005-03, von weniger als 500 APHA, bevorzugt weniger als 200 APHA, besonders bevorzugt weniger als 100 APHA, ganz besonders bevorzugt weniger als 80 APHA, insbesondere weniger als 60 APHA.

12. Lösung nach Anspruch 10 oder 11, **dadurch gekennzeichnet, dass** sich die Hazen-Farbzahl der Lösung, gemessen spektrofotometrisch nach DIN EN ISO 6271-2:2005-03, bei Lagerung unter einer Inertgasatmosphäre bei einer Temperatur von 30 °C über einen Zeitraum von 10 Wochen um weniger als 200 APHA, bevorzugt weniger als 100 APHA und besonders bevorzugt weniger als 50 APHA verändert.

13. Lösung nach einem der Ansprüche 10 bis 12, **dadurch gekennzeichnet, dass** der mindestens eine Katalysator mindestens eine zyklische Zinnverbindung der allgemeinen Formel (I), (II), (III) oder (IV) ist: 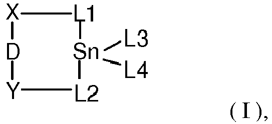 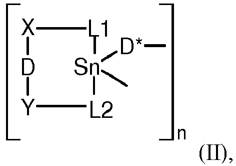 mit n > 1, 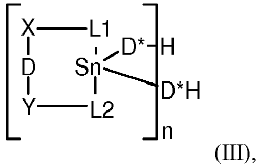 mit n > 1, 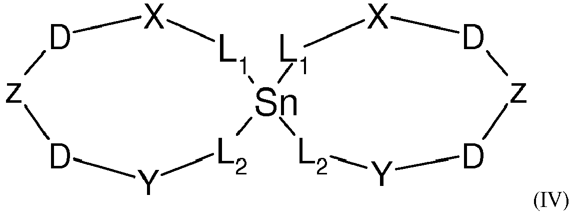 wobei gilt:
D steht für -O-, -S- oder -N(R1)-,
wobei R1 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 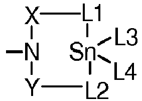 steht,
oder R1 und L3 zusammen für -Z-L5- stehen;
D* steht für -O- oder -S-;
X, Y und Z stehen für gleiche oder unterschiedliche Reste ausgewählt aus Alkylenresten der Formeln -C(R2)(R3)-, -C(R2)(R3)-C(R4)(R5)- oder -C(R2)(R3)-C(R4)(R5)-C(R6)(R7)- oder ortho-Arylenresten der Formeln 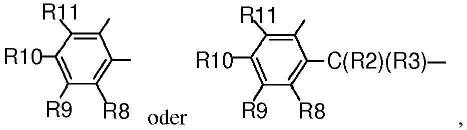
wobei R2 bis R11 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L1, L2 und L5 stehen unabhängig voneinander für -O-, -S-, -OC(=O)-, -OC(=S)-, -SC(=O)-, -SC(=S)-, -OS(=O)₂O-, -OS(=O)₂- oder -N(R12)-,
wobei R12 für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht;
L3 und L4 stehen unabhängig voneinander für -OH, -SH, -OR13, -Hal, -OC(=O)R14, -SR15, -OC(=S)R16, -OS(=O)₂OR17, -OS(=O)₂R18 oder -NR19R20, oder L3 und L4 zusammen stehen für -L1-X-D-Y-L2-,
wobei R13 bis R20 unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

14. Verwendung der Lösung nach einem der Ansprüche 10 bis 13 zur Herstellung einer Zusammensetzung enthaltend den mindestens einen Katalysator, das mindestens eine zweite Lösungsmittel, mindestens ein Polyisocyanat und mindestens eine NCO-reaktive Verbindung.

15. Zusammensetzung enthaltend mindestens ein Polyisocyanat, mindestens eine NCO-reaktive Verbindung und eine Lösung gemäß einem der Ansprüche 10 bis 13.

16. Verwendung der Zusammensetzung nach Anspruch 15 zur Herstellung von ein- oder mehrschichtigen Lackaufbauten.

17. Verfahren zur ein- oder mehrschichtigen Beschichtung eines Substrates mit einem Lackaufbau durch Aufbringen einer Zusammensetzung nach Anspruch 15 auf das Substrat.

18. Substrat, beschichtet mit einem ein- oder mehrschichtigen Lackaufbau, enthaltend eine Zusammensetzung nach Anspruch 15 und/oder erhältlich durch das Verfahren nach Anspruch 17, insbesondere **dadurch gekennzeichnet, dass** das Substrat eine Karosserie, bevorzugt von einem Fahrzeug, insbesondere von einem Landfahrzeug, Luftfahrzeug oder Wasserfahrzeug, oder ein Teil davon, ist.
